# EUROPEAN PATENT APPLICATION

(11) **EP 4 804 304 A1**
(43) Date of publication of application: **09.09.2026**
(21) Application number: 24884211.4
(22) Date of filing: 30.08.2024
(51) Int. Cl.: H01M 50/148, H01M 50/184, H01M 50/169

(54) **COVER PLATE ASSEMBLY FOR BATTERY, BATTERY, BATTERY PACK AND VEHICLE**

(30) Priority: 01.11.2023 CN 202322954041 U
(71) Applicant: BYD Company Limited, Shenzhen, Guangdong 518118 (CN)
(72) Inventor: ZHANG, Yao, Shenzhen, Guangdong 518118 (CN); CHEN, Zhuofu, Shenzhen, Guangdong 518118 (CN); ZHANG, Da, Shenzhen, Guangdong 518118 (CN); GUO, Guannan, Shenzhen, Guangdong 518118 (CN)
(74) Representative: Mathys & Squire
(86) International application number: PCT/CN2024/115834
(87) International publication number: WO 2025/092204

(57) **Abstract**

A vehicle (3000), the vehicle (3000) comprising a battery pack (2000). The battery pack (2000) comprises a battery (1000). The battery (1000) comprises a cover plate assembly (100) for the battery (1000). The cover plate assembly (100) comprises a cover plate (10), a sealing cover (20) and a welding seam part (30). A through hole (11) is formed in the cover plate (10). The sealing cover (20) is arranged on the cover plate (10) to block the through hole (11). The welding seam part (30) is arranged between the sealing cover (20) and the cover plate (10), so as to achieve sealed connection between the sealing cover (20) and the cover plate (10). The welding seam part (30) is provided with a welding seam surface (31), the end of the welding seam surface (31) far away from the through hole (11) being connected to the cover plate (10), and the end of the welding seam surface (31) close to the through hole (11) being connected to the sealing cover (20). In the thickness direction of the cover plate assembly (100), the end of the welding seam surface (31) away from the center line of the sealing cover (20) is higher than the end of the welding seam surface (31) close to the center line of the sealing cover (20).

## Description

### CROSS-REFERENCE TO RELATED APPLICATIONS

This application claims priority to Chinese Patent Application No. 202322954041.1, filed with the China National Intellectual Property Administration on November 1, 2023, and entitled "COVER PLATE ASSEMBLY FOR BATTERY, BATTERY, BATTERY PACK, AND VEHICLE", which is incorporated herein by reference in its entirety.

### TECHNICAL FIELD

This application relates to the field of battery technologies, and in particular, to a cover plate assembly for a battery, the battery, a battery pack, and a vehicle.

### BACKGROUND

In a battery cover plate assembly structure in conventional technologies, a sealing cover is welded to a battery substrate, to seal a liquid injection hole, and the sealing cover can absorb some stress generated during welding and achieve specific buffering effect. However, weld strength between the sealing cover and a cover plate is low. This affects sealing performance of a cover plate assembly.

### SUMMARY

This application is intended to resolve at least one of technical problems existing in the conventional technologies. Therefore, a first objective of this application is to provide a cover plate assembly for a battery, so that structural strength and sealing performance of the cover plate assembly can be improved.

A second objective of this application is to provide a battery, including the cover plate assembly for the battery in the foregoing embodiments.

A third objective of this application is to provide a battery pack, including the battery in the foregoing embodiments.

A fourth objective of this application is to provide a vehicle, including the battery pack in the foregoing embodiments.

The cover plate assembly for the battery according to embodiments of a first aspect of this application includes: a cover plate, wherein a through hole is formed on the cover plate; a sealing cover, wherein the sealing cover is provided on the cover plate to block the through hole; and a welding seam portion, wherein the welding seam portion is provided between the sealing cover and the cover plate to achieve a sealed connection between the sealing cover and the cover plate, the welding seam portion has a welding seam surface facing away from the cover plate, an end of the welding seam surface that is away from a center line of the sealing cover is connected to the cover plate, an end of the welding seam surface that is close to the center line of the sealing cover is connected to the sealing cover, and in a thickness direction of the cover plate assembly, the end of the welding seam surface that is away from the center line of the sealing cover is higher than the end of the welding seam surface that is close to the center line of the sealing cover.

According to the cover plate assembly in this embodiment of this application, the cover plate and the sealing cover are connected through welding. During welding, the welding seam portion is formed between the cover plate and the sealing cover. This can enhance strength of connection between the cover plate and the sealing cover, reduce difficulty of welding between the cover plate and the sealing cover, and improve stability of assembly between the sealing cover and the cover plate. Providing the welding seam surface increases the contact area between the welding seam portion and air. This can enhance performance and reliability of sealing between the sealing cover and the cover plate, and improve a helium inspection yield rate of the battery that uses the cover plate assembly.

In some embodiments, the welding seam surface is an arc-shaped surface.

In some embodiments, the through hole includes a first hole segment and a second hole segment that are connected to each other in a thickness direction of the cover plate, the sealing cover is provided in the first hole segment, and the welding seam portion is located between an outer circumferential edge of the sealing cover and an inner wall of the cover plate that forms the first hole segment.

In some embodiments, a depth of the first hole segment is h, a thickness of the sealing cover is t, and h and t satisfy: 1.8≤h/t≤2.5.

In some embodiments, a groove is formed on a surface on a side of the sealing cover that is away from the through hole, and the groove is located at an edge of the sealing cover.

In some embodiments, a depth of the groove is H, a depth of the first hole segment is h, a thickness of the sealing cover is t, and H, h, and t satisfy: H=h-t.

In some embodiments, a protrusion portion is provided on the sealing cover, at least a part of an orthographic projection of the protrusion portion in the thickness direction of the cover plate overlaps an orthographic projection of the second hole segment in the thickness direction of the cover plate, and the protrusion portion protrudes in a direction away from the second hole segment.

In some embodiments, the sealing cover includes a lapping portion; the protrusion portion includes a first bent portion, and the protrusion portion protrudes in a direction away from the second hole segment through the first bent portion; and the sealing cover includes a second bent portion, the second bent portion is located at the edge of the sealing cover and is connected end-to-end in a ring shape, the second bent portion is connected to the cover plate, a shape of the second bent portion corresponds to the inner wall of the cover plate at the first hole segment, and the first bent portion, the lapping portion, and the second bent portion enclose the groove.

In some embodiments, the cover plate forms a stepped portion between the first hole segment and the second hole segment, and the lapping portion laps the stepped portion.

In some embodiments, an included angle between a surface of the first bent portion that is away from the second hole segment and a surface of the lapping portion that is away from the stepped portion is β; an included angle between a surface of the second bent portion that is connected to the cover plate in a radial direction of the sealing cover and a central axis of the through hole is γ/2; a width of the lapping portion is L; a minimum distance between a surface on a side of the welding seam portion that is adjacent to the central axis of the sealing cover and a surface on a side of the groove that is adjacent to the central axis of the sealing cover is N₁; and L, N₁, β, and γ satisfy: 0.5t≤L≤N₁=(h-t)×tan(γ/2)+L+(v-t)×tan(β).

In some embodiments, a distance between an end of the second bent portion that is adjacent to the central axis of the sealing cover and the central axis of the sealing cover is a₁, a distance between an end of the second bent portion that is away from the central axis of the sealing cover and the central axis of the sealing cover is a₂, and a₁ and a₂ satisfy: 1 mm≤h×tan(γ/2)+a₁≤20 mm.

In some embodiments, L, N₁, a₁, and a₂ satisfy: 0 mm≤(N₁-(a₂-a₁)×(h-t)/h-L)/tan(β)≤4 mm.

In some embodiments, a minimum distance between an end of the welding seam portion that is close to the stepped portion and the stepped portion is N₂, and N₂ satisfies: 0.5t≤N₂≤t.

In some embodiments, a minimum straight-line distance between the end of the welding seam surface of the welding seam portion that is away from the center line of the sealing cover and an end of the welding seam surface that is close to the through hole is T, the thickness of the sealing cover is t, and T and t satisfy: t≤T≤4t.

In some embodiments, a maximum distance from the end of the welding seam portion that is close to the stepped portion to the welding seam surface is W, a thickness of the sealing cover is t, and W and t satisfy: 0.5t≤W≤2t.

In some embodiments, a cross section of the sealing cover along a plane parallel to the cover plate is elliptical, a length of a semi-major axis of the sealing cover is a, a length of a semi-minor axis is b, and a and b satisfy: 1 mm≤a≤20 mm, 1 mm≤b≤20 mm, and 1<a/b≤2.

The battery according to embodiments of a second aspect of this application includes: a housing, wherein an opening is formed on the housing; a cover plate assembly, wherein the cover plate assembly is fitted at the opening, the cover plate assembly and the housing define an accommodation cavity, and the cover plate assembly is the cover plate assembly for the battery in any one of the foregoing embodiments; and a cell, wherein the cell is provided in the accommodation cavity.

The battery pack according to embodiments of a third aspect of this application includes the battery in embodiments of the second aspect of this application.

The vehicle according to embodiments of a fourth aspect of this application includes the battery pack in embodiments of the third aspect of this application.

Additional aspects and advantages of this application will be given in part in the following descriptions and in part will be obvious from the following descriptions, or will be learned from the practice of this application.

### DESCRIPTION OF DRAWINGS

The above and/or additional aspects and advantages of this application will become apparent and readily understood from the descriptions of embodiments taken in conjunction with the following accompanying drawings.
FIG. 1 is a diagram of a cover plate assembly according to an embodiment of this application;
FIG. 2 is an enlarged diagram of a region P in FIG. 1;
FIG. 3 is a diagram of fitting between a sealing cover and a cover plate according to an embodiment of this application;
FIG. 4 is a diagram of a sealing cover according to an embodiment of this application;
FIG. 5 is a diagram of a sealing cover from another angle of view according to an embodiment of this application;
FIG. 6 is a block diagram of a battery according to an embodiment of this application;
FIG. 7 is a block diagram of a battery pack according to an embodiment of this application; and
FIG. 8 is a block diagram of a vehicle according to an embodiment of this application.

### Reference numerals:

3000: vehicle;
1000: battery; 2000: battery pack;
100: cover plate assembly; 200: housing; 201: opening; 202: accommodation cavity; 203: cell;
10: cover plate; 11: through hole; 12: first hole segment; 13: second hole segment; 14: stepped portion;
20: sealing cover; 21: lapping portion; 22: groove; 23: protrusion portion; 24: first bent portion; 25: second bent portion;
30: welding seam portion; 31: welding seam surface.

### DESCRIPTION OF EMBODIMENTS

Embodiments of this application are described in detail below. Embodiments described with reference to the accompanying drawings are examples.

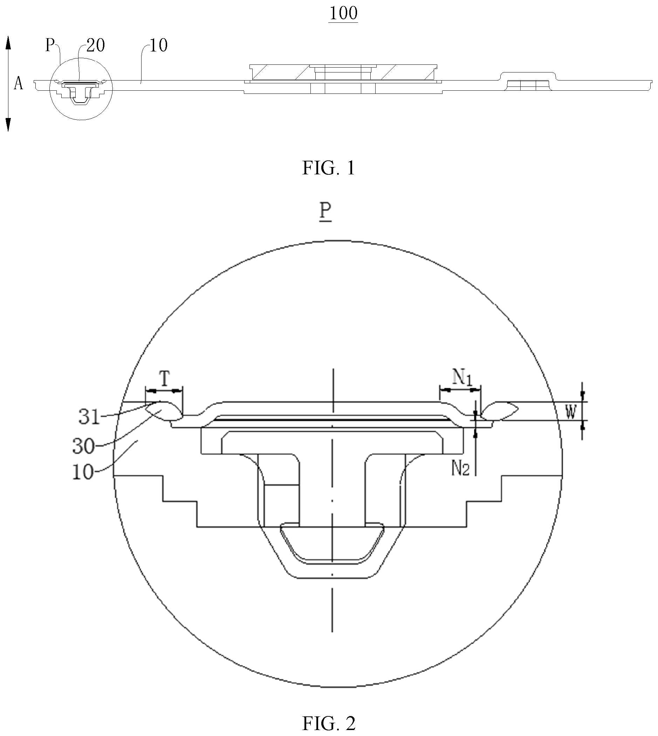

A cover plate assembly 100 for a battery according to an embodiment of this application is described below with reference to FIG. 1 to FIG. 5. The cover plate assembly 100 includes a cover plate 10, a sealing cover 20, and a welding seam portion 30. The cover plate 10 has a thickness direction A.

Specifically, as shown in FIG. 1 to FIG. 5, a through hole 11 is formed on the cover plate 10, and the sealing cover 20 is provided on the cover plate 10 to block the through hole 11. The welding seam portion 30 is located between the sealing cover 20 and the cover plate 10 to achieve a sealed connection between the sealing cover 20 and the cover plate 10. The welding seam portion 30 has a welding seam surface 31 facing away from the cover plate 10. An end of the welding seam surface 31 that is away from a center line of the sealing cover 20 is connected to the cover plate 10, and an end of the welding seam surface 31 that is close to the center line of the sealing cover 20 is connected to the sealing cover 20. In the thickness direction A of the cover plate assembly 100, the end of the welding seam surface 31 that is away from the center line of the sealing cover 20 is higher than the end that is close to the center line of the sealing cover 20.

Referring to FIG. 1 to FIG. 3, the through hole 11 extends through the cover plate 10 in the thickness direction A of the cover plate 10. The sealing cover 20 is opposite to the through hole 11 in the thickness direction A of the cover plate 10. The welding seam portion 30 is provided between a side wall on an outer circumferential side of the sealing cover 20 and a side wall on an inner circumferential side of the through hole 11 to connect the sealing cover 20 to the cover plate 10, to seal the sealing cover 20. An outer circumferential edge of the sealing cover 20 is circular. An inner wall of the through hole 11 on the cover plate 10 is adapted to the outer circumferential edge of the sealing cover 20. The sealing cover 20 with the circular outer circumferential edge coincides with a circle center of the through hole 11. The sealing cover 20 is located at the through hole 11 and is concentrically provided with the through hole 11.

The welding seam portion 30 is located between the outer circumferential edge of the sealing cover 20 and the inner wall of the through hole 11. The welding seam surface 31 is provided on a side of the welding seam portion 30 that is away from the through hole 11 in the thickness direction A of the cover plate 10. One end of the welding seam surface 31 laps the cover plate 10, and the other end of the welding seam surface 31 laps the sealing cover 20. The welding seam surface 31 is away from the cover plate 10 and the sealing cover 20 in the thickness direction A of the cover plate 10 and is exposed to the external atmosphere. That is, the welding seam surface 31 is located on a surface on a side in the thickness direction A of the cover plate 10.

According to the cover plate assembly 100 in this embodiment of this application, the cover plate 10 and the sealing cover 20 are connected through welding. During welding, the welding seam portion 30 is formed between the cover plate 10 and the sealing cover 20. This can enhance strength of a connection between the cover plate 10 and the sealing cover 20, reduce difficulty of welding between the cover plate 10 and the sealing cover 20, and improve stability of assembly between the sealing cover 20 and the cover plate 10. Providing the welding seam surface 31 increases the contact area between the welding seam portion 30 and air. This can enhance performance and reliability of sealing between the sealing cover 20 and the cover plate 10, and improve a helium inspection yield rate of the battery that uses the cover plate assembly 100.

According to some embodiments of this application, as shown in FIG. 2, the welding seam surface 31 is an arc-shaped surface. The welding seam surface 31 is the arc-shaped surface, so that an edge-covering weld can be formed, and the edge-covering weld has a wider weld width margin. A weld width is a transverse width of a molten metal of a welding wire or a welding rod during welding, and is also a width of a joint between two workpieces that is melted during welding. In this way, a weld width between the sealing cover 20 and the cover plate 10 can be larger, and reliability of welding and sealing between the sealing cover 20 and the cover plate 10 can be improved. In this way, that the welding seam surface 31 is the arc-shaped surface helps improve reliability of welding and sealing between the sealing cover 20 and the cover plate 10, and also makes an appearance of the cover plate assembly 100 more concise and more beautiful.

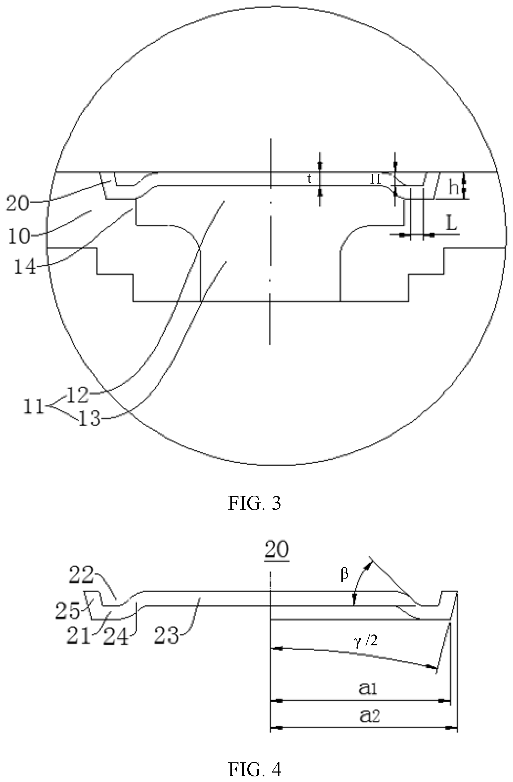

According to some embodiments of this application, as shown in FIG. 3, the through hole 11 includes a first hole segment 12 and a second hole segment 13 that are connected to each other in the thickness direction A of the cover plate 10. The sealing cover 20 is provided in the first hole segment 12, and the welding seam portion 30 is located between the outer circumferential edge of the sealing cover 20 and an inner wall of the cover plate 10 that forms the first hole segment 12. The first hole segment 12 and the second hole segment 13 are coaxially arranged. An end of the first hole segment 12 in the thickness direction A of the cover plate 10 communicates with an end of the second hole segment 13 that is adjacent to the sealing cover 20 in the thickness direction A of the cover plate 10. A cross-sectional area of the first hole segment 12 in the thickness direction A of the cover plate 10 is greater than a cross-sectional area of the second hole segment 13 in the thickness direction A of the cover plate 10.

In this way, providing the first hole segment 12 facilitates mounting of the sealing cover 20. The welding seam portion 30 is located between the outer circumferential edge of the sealing cover 20 and the inner wall of the first hole segment 12, which facilitates a fixed connection between the sealing cover 20 and the first hole segment 12. The first hole segment 12 can achieve specific limiting effect on the sealing cover 20. Providing the second hole segment 13 facilitates communication between the first hole segment 12 and the inside of the cover plate assembly 100. Providing the first hole segment 12 and the second hole segment 13 can improve positional accuracy of the sealing cover 20, thereby enhancing mounting accuracy of the cover plate assembly 100.

According to some embodiments of this application, as shown in FIG. 3, a depth of the first hole segment 12 is h, a thickness of the sealing cover 20 is t, and h and t satisfy: 1.8≤h/t≤2.5. If h/t is less than 1.8, a depth of the first hole segment 12 is excessively small, and space for accommodating the sealing cover 20 is excessively small. This increases difficulty of assembling the sealing cover 20 and the first hole segment 12, and easily causes the sealing cover 20 to protrude from an upper surface of the cover plate 10, affecting mounting of the cover plate assembly 100. The large thickness of the sealing cover 20 increases difficulty of production of the sealing cover 20, resulting in higher production costs of the sealing cover 20 and a waste of production materials.

If h/t is greater than 2.5, a depth of the first hole segment 12 is excessively large, and space for accommodating the sealing cover 20 is excessively large. This is not conducive to improving a space utilization rate inside the cover plate 10. The excessively small thickness of the sealing cover 20 causes excessively low structural strength of the sealing cover 20. For example, h/t=2.

In this way, limiting a relationship between the depth of the first hole segment 12 and the thickness of the sealing cover 20 can ensure that the first hole segment 12 has sufficient space to accommodate the sealing cover 20, and can also ensure the structural strength of the sealing cover 20, to improve positional accuracy of mounting the sealing cover 20 in the first hole segment 12, and improve assembly stability of the cover plate assembly 100. In addition, the depth of the first hole segment 12 is twice the thickness of the sealing cover 20. This leaves enough space for welding the sealing cover 20, avoids welding through the sealing cover 20, and ensures sealing effect of the sealing cover 20.

According to some embodiments of this application, as shown in FIG. 4, a groove 22 is formed on a surface on a side of the sealing cover 20 that is away from the through hole 11, and the groove 22 is located at an edge of the sealing cover 20. The groove 22 is formed by a part, of a surface on a side of the sealing cover 20 that is away from the through hole 11 in the thickness direction A of the cover plate 10, being recessed in the thickness direction A of the cover plate 10 toward a direction close to the through hole 11. The groove 22 extends in a circumferential direction of the through hole 11, and a shape of the groove 22 corresponds to the outer circumferential edge of the sealing cover 20. The groove 22 and a lapping portion 21 of the sealing cover 20 are opposite to each other in the thickness direction A of the cover plate 10, so that the groove 22 can release welding stress more comprehensively. In this way, the groove 22 is provided on the sealing cover 20, so that welding stress generated during welding of the sealing cover 20 and the cover plate 10 can be released through the groove 22, thereby avoiding cracking of the welding seam portion 30 due to excessively large welding stress on the sealing cover 20. Providing the groove 22 ensures a yield rate and reliability of the welding seam portion 30. This is beneficial to reducing production costs of the cover plate assembly 100.

According to some embodiments of this application, as shown in FIG. 3 and FIG. 4, a depth of the groove 22 is H, the depth of the first hole segment 12 is h, the thickness of the sealing cover 20 is t, and H, h, and t satisfy: H=h-t. In this way, the depth of the groove 22 is limited by the depth of the first hole segment 12 and the thickness of the sealing cover 20, so that welding stress generated during welding of the sealing cover 20 can be released to a maximum extent. This is conducive to complete release of welding stress, and further improves the yield rate and reliability of the welding seam portion 30.

According to some embodiments of this application, as shown in FIG. 3 and FIG. 4, a protrusion portion 23 is provided on the sealing cover 20, at least a part of an orthographic projection of the protrusion portion 23 in the thickness direction A of the cover plate 10 overlaps an orthographic projection of the second hole segment 13 in the thickness direction A of the cover plate 10, and the protrusion portion 23 protrudes in a direction away from the second hole segment 13. The protrusion portion 23 is located in a center of the sealing cover 20, and the protrusion portion 23 and the second hole segment 13 are provided opposite to each other in the thickness direction A of the cover plate 10. The protrusion portion 23 is formed by a part of the center of the sealing cover 20 protruding in the thickness direction A of the cover plate 10 toward a direction away from the second hole segment 13. There is a specific spacing between a surface on a side of the protrusion portion 23 that is adjacent to the second hole segment 13 in the thickness direction A of the cover plate 10 and the second hole segment 13. Space between the protrusion portion 23 and the second hole segment 13 is a clearance portion. A side of the clearance portion that is away from the through hole 11 in the thickness direction A of the cover plate 10 is parallel to a surface on a side of the cover plate 10 that is away from the through hole 11. The groove 22 surrounds a circumferential side of the protrusion portion 23. In this way, providing the protrusion portion 23 can provide a specific spacing between the sealing cover 20 and the second hole segment 13, and provide more heat dissipation space for the sealing cover 20. This is conducive for heat dissipation of the sealing cover 20 during welding and reduces welding difficulty.

According to some embodiments of this application, as shown in FIG. 3 and FIG. 4, the sealing cover 20 includes the lapping portion 21, the protrusion portion 23 includes a first bent portion 24, the protrusion portion 23 protrudes in the direction away from the second hole segment 13 through the first bent portion 24, the sealing cover 20 includes a second bent portion 25, the second bent portion 25 is located at the edge of the sealing cover 20 and is connected end-to-end in a ring shape, the second bent portion 25 is connected to the cover plate 10, a shape of the second bent portion 25 corresponds to the inner wall of the cover plate 10 at the first hole segment 12, and the first bent portion 24, the lapping portion 21, and the second bent portion 25 enclose the groove 22. The first bent portion 24 connects the protrusion portion 23 to the lapping portion 21. The first bent portion 24 is located at an edge of the protrusion portion 23 and is connected end-to-end in a ring shape. The second bent portion 25 is connected to the lapping portion 21. The second bent portion 25 is provided opposite to the inner wall of the first hole segment 12. The welding seam portion 30 is located between the second bent portion 25 and the inner wall of the first hole segment 12. Thicknesses of the protrusion portion 23, the first bent portion 24, the lapping portion 21, and the second bent portion 25 are equal.

In this way, through providing the protrusion portion 23, the first bent portion 24, the lapping portion 21, and the second bent portion 25, the sealing cover 20 can buffer stress generated during welding, thereby absorbing and releasing the stress generated during welding, and achieving better buffering effect. A structure of the sealing cover 20 is easier for stamp forming. This can reduce difficulty of stamp forming and improve forming efficiency. After forming, stress on the sealing cover 20 is dispersed and not concentrated, so that the stress does not cause the welding seam portion 30 to crack, thereby making fatigue resistance of the cover plate assembly 100 better, and ensuring quality of the welding seam portion 30 and sealing reliability of the cover plate assembly 100.

According to some embodiments of this application, as shown in FIG. 3 and FIG. 4, the cover plate 10 forms a stepped portion 14 between the first hole segment 12 and the second hole segment 13, and the lapping portion 21 laps the stepped portion 14. The stepped portion 14 is located at an end of the first hole segment 12 that is adjacent to the second hole segment 13 in the thickness direction A of the cover plate 10. The stepped portion 14 extends in the circumferential direction of the through hole 11. The stepped portion 14 is provided opposite to the sealing cover 20 in the thickness direction A of the cover plate 10. The lapping portion 21 of the sealing cover 20 is located on a side of the sealing cover 20 that is adjacent to the second hole segment 13 in the thickness direction A of the cover plate 10. When the sealing cover 20 is mounted in the first hole segment 12, the lapping portion 21 of the sealing cover 20 abuts against the stepped portion 14. In this way, providing the stepped portion 14 can limit the sealing cover 20 in the thickness direction A of the cover plate 10 through the through hole 11. The lapping portion 21 abuts against the stepped portion 14, so that the contact area between the sealing cover 20 and the stepped portion 14 can be increased, thereby making mounting of the sealing cover 20 in the through hole 11 more tight and improving connection strength and mounting stability of the sealing cover 20.

According to some embodiments of this application, as shown in FIG. 2 to FIG. 4, an included angle between a surface of the first bent portion 24 that is away from the second hole segment 13 and a surface of the lapping portion 21 that is away from the stepped portion 14 is β, an included angle between a surface of the second bent portion 25 that is connected to the cover plate 10 in a radial direction of the sealing cover 20 and a central axis of the through hole 11 is γ/2, a width of the lapping portion 21 is L, a minimum distance between a surface on a side of the welding seam portion 30 that is adjacent to the central axis of the sealing cover 20 and a surface on a side of the groove 22 that is adjacent to the central axis of the sealing cover 20 is N₁, and L, N₁, β, and γ satisfy: t/2≤L≤N₁=(h-t)×tan(γ/2)+L+(v-t)×tan(β).

An included angle between a surface on a side of the first bent portion 24 that is away from the second hole segment 13 and a surface on a side of the lapping portion 21 that is away from the stepped portion 14 in the thickness direction A of the cover plate 10 is β. An included angle between a surface on a side of the second bent portion 25 that is opposite to the inner wall of the cover plate 10 and the central axis of the through hole 11 is γ. The width L of the lapping portion 21 is a distance between a connection position between the surface on the side of the lapping portion 21 that is away from the stepped portion 14 in the thickness direction A of the cover plate 10 and the first bent portion 24 and a connection position between the lapping portion 21 and the second bent portion 25. If L, N₁, β, and γ do not satisfy: t/2≤L≤N₁=(h-t)×tan(γ/2)+L+(v-t)×tan(β), effect of welding between the sealing cover 20 and the cover plate 10 is affected, making sealing effect of the welding seam portion 30 worse. In this way, limiting values of L, N₁, β, and γ and a relationship between L, N₁, β, and γ can ensure a welding process of the sealing cover 20, and prevent weld width heat of the welding seam portion 30 from burning the protrusion portion 23 of the sealing cover 20, thereby avoiding impact on sealing performance of the sealing cover 20.

According to some embodiments of this application, as shown in FIG. 2 to FIG. 4, a distance between an end of the second bent portion 25 that is adjacent to the central axis of the sealing cover 20 and the central axis of the sealing cover 20 is a₁, a distance between an end of the second bent portion 25 that is away from the central axis of the sealing cover 20 and the central axis of the sealing cover 20 is a₂, and a₁ and a₂ satisfy: 1 mm≤h×tan(γ/2)+a₁≤20 mm.

The second bent portion 25 is inclinedly provided on the edge of the sealing cover 20. One end of the second bent portion 25 is connected to the lapping portion 21, and the other end of the second bent portion 25 inclinedly extends in the thickness direction A of the cover plate 10 toward a direction away from the lapping portion 21 and away from the central axis of the sealing cover 20. The distance between the end of the second bent portion 25 that is adjacent to the central axis of the sealing cover 20, namely, an end of an outer circumferential side wall of the sealing cover 20 that is adjacent to the stepped portion 14 in the thickness direction A of the cover plate 10, and the central axis of the sealing cover 20 is a₁. The distance between the end of the second bent portion 25 that is away from the central axis of the sealing cover 20, namely, an end of the outer circumferential side wall of the sealing cover 20 that is away from the stepped portion 14 in the thickness direction A of the cover plate 10, and the central axis of the sealing cover 20 is a₂.

In this way, limiting values of a₁ and a₂ and a relationship between a₁, a₂, h, and γ can limit a distance between the second bent portion 25 and the central axis of the sealing cover 20, thereby improving production accuracy of the sealing cover 20 and positional accuracy of the welding seam portion 30, making effect of welding between the sealing cover 20 and the cover plate 10 better.

According to some embodiments of this application, as shown in FIG. 2 to FIG. 4, L, N₁, a₁, and a₂ satisfy: 0 mm≤(N₁-(a₂-a₁)×(h-t)/h-L)/tan(β)≤4 mm. In this way, limiting values of L, N₁, a₁, and a₂ and a relationship between L, N₁, a₁, and a₂ can limit an inclination angle of the second bent portion 25 relative to the lapping portion 21, to effectively improve welding effect during welding of the sealing cover 20 and the cover plate 10, thereby improving welding strength and sealing performance of the welding seam portion 30, and improving overall structural strength and sealing performance of the cover plate assembly 100.

According to some embodiments of this application, as shown in FIG. 2, a minimum distance between an end of the welding seam portion 30 that is close to the stepped portion 14 and the stepped portion 14 is N₂, and N₂ satisfies: 0.5t≤N₂≤t. If the minimum distance N₂ between the end of the welding seam portion 30 that is close to the stepped portion 14 and the stepped portion 14 is less than 0.5t, a thickness of the welding seam portion 30 in the thickness direction A of the cover plate 10 is excessively large. This increases difficulty of welding and makes it easy for the sealing cover 20 to be welded through. If the minimum distance N₂ between the end of the welding seam portion 30 that is close to the stepped portion 14 and the stepped portion 14 is greater than t, a thickness of the welding seam portion 30 in the thickness direction A of the cover plate 10 is excessively small. This may easily lead to insufficiently secure welding between the sealing cover 20 and the cover plate 10, resulting in low structural strength of the cover plate assembly 100. For example, N₂=0.75t. In this way, limiting the minimum distance between the end of the welding seam portion 30 that is close to the stepped portion 14 and the stepped portion 14 can reduce welding difficulty and improve structural strength of the cover plate assembly 100 while ensuring strength of a connection between the sealing cover 20 and the cover plate 10.

According to some embodiments of this application, as shown in FIG. 2 and FIG. 3, a minimum straight-line distance between the end of the welding seam surface 31 of the welding seam portion 30 that is away from the center line of the sealing cover 20 and an end of the welding seam surface 31 that is close to the through hole 11 is T, the thickness of the sealing cover 20 is t, and T and t satisfy: t≤T≤4t. In other words, a weld width of the welding seam portion 30 is T, the thickness of the sealing cover 20 is t, and T and t satisfy: t≤T≤4t. If the weld width T of the welding seam portion 30 is less than t, the weld width of the welding seam portion 30 is excessively small, resulting in insufficient welding strength of a connection between the sealing cover 20 and the cover plate 10. This affects assembly strength of the cover plate assembly 100. If the weld width T of the welding seam portion 30 is greater than 4t, the weld width of the welding seam portion 30 is excessively large, and a side wall of the sealing cover 20 is welded through during welding, causing damage to the sealing cover 20 and increasing welding time. This results in excessive heat generation, causing burning of a middle part of the sealing cover 20 and affecting performance of the sealing cover 20. For example, T=t. In this way, limiting the weld width of the welding seam portion 30 can effectively ensure effect of welding between the sealing cover 20 and the cover plate 10, enhance strength of a connection between the sealing cover 20 and the cover plate 10, and improve sealing performance of the welding seam portion 30.

According to some embodiments of this application, as shown in FIG. 2 and FIG. 3, a maximum distance from the end of the welding seam portion 30 that is close to the stepped portion 14 to the welding seam surface 31 is W, that is, a weld depth of the welding seam portion 30 in the thickness direction A of the cover plate 10 is W, the thickness of the sealing cover 20 is t, and W and t satisfy: t/2≤W≤2t. If the weld depth W of the welding seam portion 30 in the thickness direction A of the cover plate 10 is less than t/2, the weld depth of the welding seam portion 30 in the thickness direction A of the cover plate 10 is excessively small. This leads to an insufficiently secure connection between the sealing cover 20 and the cover plate 10, resulting in reduction in structural strength of the cover plate assembly 100. If the weld depth W of the welding seam portion 30 in the thickness direction A of the cover plate 10 is greater than 2t, the weld depth of the welding seam portion 30 in the thickness direction A of the cover plate 10 is excessively large. This increases difficulty of operation during welding and is not conducive to reducing production costs of the cover plate assembly 100. For example, W=1t. In this way, limiting the weld depth of the welding seam portion 30 in the thickness direction A of the cover plate 10 can ensure strength of a connection between the sealing cover 20 and the cover plate 10, enhance sealing performance of the welding seam portion 30, reduce difficulty of welding between the sealing cover 20 and the cover plate 10, and reduce production costs of the cover plate assembly 100.

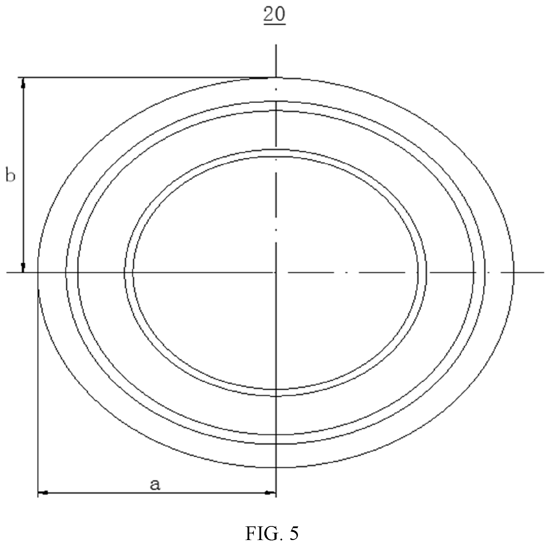

According to some embodiments of this application, as shown in FIG. 5, a cross section of the sealing cover 20 along a plane parallel to the cover plate 10 is elliptical, a length of a semi-major axis of the sealing cover 20 is a, a length of a semi-minor axis is b, and a and b satisfy: 1 mm≤a≤20 mm, 1 mm≤b≤20 mm, and 1≤a/b≤2. When a/b=1, the sealing cover 20 is circular. When a/b is less than 1 or greater than 2, the sealing cover 20 is elliptical, and the sealing cover 20 is a flat ellipse. The elliptical sealing cover 20 is not conducive to uniform distribution of welding stress when welding with the cover plate 10. It is easy for the stress generated during welding to be concentrated at both ends of the ellipse. This leads to cracking of the welding seam portion 30 at both ends of the sealing cover 20 and affects sealing performance of the sealing cover 20.

In this way, limiting the length of the semi-major axis and the length of the semi-minor axis of the sealing cover 20 can limit a shape of the sealing cover 20, so that the sealing cover 20 can be adapted to the cover plate 10. Limiting a length relationship between the semi-minor axis and the semi-minor axis of the sealing cover 20 makes it easier to limit the shape of the sealing cover 20, improve processing accuracy of the sealing cover 20, reduce difficulty of welding between the sealing cover 20 and the cover plate 10, and enhance strength and sealing performance of the welding seam portion 30 between the sealing cover 20 and the cover plate 10.

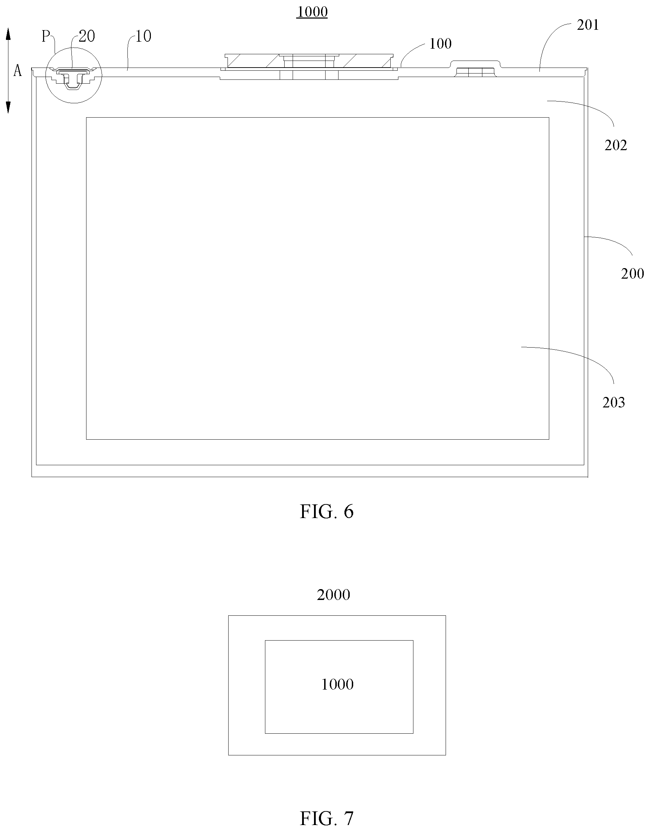

According to a battery 1000 in embodiments of a second aspect of this application, as shown in FIG. 6, the battery 1000 includes a housing 200, a cover plate assembly 100, and a cell 203. The housing 200 has an opening 201, and the cover plate assembly 100 is fitted at the opening 201. The cover plate assembly 100 and the housing 200 define an accommodation cavity 202. The cover plate assembly 100 is the cover plate assembly 100 for the battery in any one of the foregoing embodiments, and the cell 203 is provided in the accommodation cavity 202. That is, an end of the housing 200 is open to form the opening 201, and the cell 203 is provided in the housing 200 at the opening 201. The cover plate assembly 100 is fitted with the housing 200 at the opening 201, to seal the housing 200, so that the cell 203 is placed in the closed accommodation cavity 202.

According to the battery 1000 in embodiments of this application, by using the cover plate assembly 100 in the foregoing embodiments, welding slag generated during welding of the cover plate assembly 100 can be avoided from falling into the battery through a through hole 11 on a cover plate 10 due to vibration or other reasons during manufacturing or use of the cell 203. This effectively improves sealing performance and structural strength of the cover plate assembly 100, thereby improving overall performance of the battery 1000 and enhancing safety of the battery 1000.

A battery pack 2000 according to embodiments of a third aspect of this application includes the battery 1000 in the foregoing embodiments, as shown in FIG. 7.

According to the battery pack 2000 in embodiments of this application, by using the battery 1000 in the foregoing embodiments, a yield rate and reliability of the battery pack 2000 in a production process can be improved. This is conducive to reducing manufacturing cost of the battery pack 2000, effectively improves overall performance and safety of the battery pack 2000, reduces production costs of the battery pack 2000, and extends service life of the battery pack 2000.

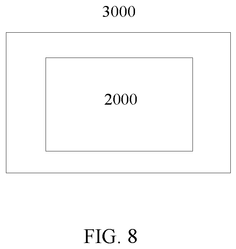

A vehicle 3000 according to embodiments of a fourth aspect of this application includes the battery pack 2000 in the foregoing embodiments, as shown in FIG. 8.

According to the vehicle 3000 in embodiments of this application, by using the battery pack 2000 in the foregoing embodiments, a service life of the battery pack 2000 can be extended, thereby extending a service life of the vehicle 3000, improving overall performance and safety performance of the vehicle 3000, and reducing after-sales costs of the vehicle 3000.

In descriptions of this application, it will be understood that orientation or position relationships indicated by terms "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are orientation or position relationships based on the accompanying drawings, and are merely intended for ease of describing this application and simplifying the descriptions, but are not intended to indicate or imply that a specified apparatus or element needs to have a specific orientation or be constructed and operated in a specific orientation. Therefore, this will not be understood as a limitation on this application.

In descriptions of this application, a "first feature" or a "second feature" may include one or more features. In descriptions of this application, "a plurality of" means two or more. In descriptions of this application, that a first feature is "above" or "below" a second feature may include that the first feature is in direct contact with the second feature, or may include that the first feature is not in direct contact with the second feature but is in contact with the second feature through another feature between the first feature and the second feature. In descriptions of this application, that the first feature is "above", "over", and "beyond" the second feature includes that the first feature is right above and obliquely above the second feature, or merely indicates that the first feature is horizontally higher than the second feature.

In descriptions of this specification, reference to descriptions of the terms such as "one embodiment", "some embodiments", "example embodiment", "example", "specific example", or "some examples" means that specific features, structures, materials, or features described with reference to embodiments or examples are included in at least one embodiment or example of this application. In this specification, example expressions of the foregoing terms do not necessarily indicate same embodiments or examples.

Although embodiments of this application have been shown and described, a person of ordinary skill in the art may understand that various changes, modifications, substitutions, and variations may be made to these embodiments without departing from the principle and spirit of this application. The scope of this application is defined by the claims and their equivalents.

## Claims

1. A cover plate assembly (100) for a battery, comprising:
a cover plate (10), wherein a through hole (11) is formed on the cover plate (10);
a sealing cover (20), wherein the sealing cover (20) is provided on the cover plate (10) to block the through hole (11); and
a welding seam portion (30), wherein the welding seam portion (30) is provided between the sealing cover (20) and the cover plate (10) to achieve a sealed connection between the sealing cover (20) and the cover plate (10), the welding seam portion (30) has a welding seam surface (31) facing away from the cover plate (10), an end of the welding seam surface (31) that is away from a center line of the sealing cover (20) is connected to the cover plate (10), an end of the welding seam surface (31) that is close to the center line of the sealing cover (20) is connected to the sealing cover (20), and in a thickness direction of the cover plate assembly (100), the end of the welding seam surface (31) that is away from the center line of the sealing cover (20) is higher than the end of the welding seam surface (31) that is close to the center line of the sealing cover (20).

2. The cover plate assembly (100) for the battery according to claim 1, wherein the welding seam surface (31) is an arc-shaped surface.

3. The cover plate assembly (100) for the battery according to claim 1 or 2, wherein the through hole (11) comprises a first hole segment (12) and a second hole segment (13) that are connected to each other in a thickness direction of the cover plate (10), the sealing cover (20) is provided in the first hole segment (12), and the welding seam portion (30) is located between an outer circumferential edge of the sealing cover (20) and an inner wall of the cover plate (10) that forms the first hole segment (12).

4. The cover plate assembly (100) for the battery according to claim 3, wherein a depth of the first hole segment (12) is h, a thickness of the sealing cover (20) is t, and h and t satisfy: 1.8≤h/t≤2.5.

5. The cover plate assembly (100) for the battery according to claim 3, wherein a groove (22) is formed on a surface on a side of the sealing cover (20) that is away from the through hole (11), and the groove (22) is located at an edge of the sealing cover (20).

6. The cover plate assembly (100) for the battery according to claim 5, wherein a depth of the groove (22) is H, a depth of the first hole segment (12) is h, a thickness of the sealing cover (20) is t, and H, h, and t satisfy: H=h-t.

7. The cover plate assembly (100) for the battery according to claim 5, wherein a protrusion portion (23) is provided on the sealing cover (20), at least a part of an orthographic projection of the protrusion portion (23) in the thickness direction of the cover plate (10) overlaps an orthographic projection of the second hole segment (13) in the thickness direction of the cover plate (10), and the protrusion portion (23) protrudes in a direction away from the second hole segment (13).

8. The cover plate assembly (100) for the battery according to claim 7, wherein the sealing cover (20) comprises a lapping portion (21);
the protrusion portion (23) comprises a first bent portion (24), and the protrusion portion (23) protrudes in a direction away from the second hole segment (13) through the first bent portion (24); and
the sealing cover (20) comprises a second bent portion (25), the second bent portion (25) is located at the edge of the sealing cover (20) and is connected end-to-end in a ring shape, the second bent portion (25) is connected to the cover plate (10), a shape of the second bent portion (25) corresponds to the inner wall of the cover plate (10) at the first hole segment (12), and the first bent portion (24), the lapping portion (21), and the second bent portion (25) enclose the groove (22).

9. The cover plate assembly (100) for the battery according to claim 8, wherein the cover plate (10) forms a stepped portion (14) between the first hole segment (12) and the second hole segment (13), and the lapping portion (21) laps the stepped portion (14).

10. The cover plate assembly (100) for the battery according to claim 9, wherein an included angle between a surface of the first bent portion (24) that is away from the second hole segment (13) and a surface of the lapping portion (21) that is away from the stepped portion (14) is β;
an included angle between a surface of the second bent portion (25) that is connected to the cover plate (10) in a radial direction of the sealing cover (20) and a central axis of the through hole (11) is γ/2;
a width of the lapping portion (21) is L;
a minimum distance between a surface on a side of the welding seam portion (30) that is adjacent to the central axis of the sealing cover (20) and a surface on a side of the groove (22) that is adjacent to the central axis of the sealing cover (20) is N₁; and
L, N₁, β, and γ satisfy: 0.5t≤L≤N₁=(h-t)×tan(γ/2)+L+(v-t)×tan(β).

11. The cover plate assembly (100) for the battery according to claim 10, wherein a distance between an end of the second bent portion (25) that is adjacent to the central axis of the sealing cover (20) and the central axis of the sealing cover (20) is a₁, a distance between an end of the second bent portion (25) that is away from the central axis of the sealing cover (20) and the central axis of the sealing cover (20) is a₂, and a₁ and a₂ satisfy: 1 mm≤h×tan(γ/2)+a₁≤20 mm.

12. The cover plate assembly (100) for the battery according to claim 11, wherein L, N₁, a₁, and a₂ satisfy: 0 mm≤(N₁-(a₂-a₁)×(h-t)/h-L)/tan(β)≤4 mm.

13. The cover plate assembly (100) for the battery according to any one of claims 9 to 12, wherein a minimum distance between an end of the welding seam portion (30) that is close to the stepped portion (14) and the stepped portion (14) is N₂, and N₂ satisfies: 0.5t≤N₂≤t.

14. The cover plate assembly (100) for the battery according to any one of claims 1 to 13, wherein a minimum straight-line distance between the end of the welding seam surface (31) of the welding seam portion (30) that is away from the center line of the sealing cover (20) and an end of the welding seam surface (31) that is close to the through hole (11) is T, the thickness of the sealing cover (20) is t, and T and t satisfy: t≤T≤4t.

15. The cover plate assembly (100) for the battery according to any one of claims 9 to 13, wherein a maximum distance from the end of the welding seam portion (30) that is close to the stepped portion (14) to the welding seam surface (31) is W, a thickness of the sealing cover (20) is t, and W and t satisfy: 0.5t≤W≤2t.

16. The cover plate assembly (100) for the battery according to any one of claims 1 to 15, wherein a cross section of the sealing cover (20) along a plane parallel to the cover plate (10) is elliptical, a length of a semi-major axis of the sealing cover (20) is a, a length of a semi-minor axis is b, and a and b satisfy: 1 mm≤a≤20 mm, 1 mm≤b≤20 mm, and 1<a/b≤2.

17. A battery (1000), comprising:
a housing (200), wherein an opening (201) is formed on the housing (200);
a cover plate assembly (100), wherein the cover plate assembly (100) is fitted at the opening (201), the cover plate assembly (100) and the housing (200) define an accommodation cavity (202), and the cover plate assembly (100) is the cover plate assembly (100) for the battery according to any one of claims 1 to 16; and
a cell (203), wherein the cell (203) is provided in the accommodation cavity (202).

18. A battery pack (2000), comprising the battery (1000) according to claim 17.

19. A vehicle (3000), comprising the battery pack (2000) according to claim 18.
